# EUROPEAN PATENT APPLICATION

(11) **EP 4 711 024 A1**
(43) Date of publication of application: **18.03.2026**
(21) Application number: 25201879.1
(22) Date of filing: 12.09.2025
(51) Int. Cl.: B01D 29/44, B01D 29/64, B01D 35/143, B01D 37/04, B07B 1/00, C02F 1/00, E03F 5/14, G06N 5/00, G06N 20/00, H04L 67/00

(54) **WASTEWATER SCREEN FILTER AND VIBRATION MONITOR**

(30) Priority: 13.09.2024 US 202463694500 P
(71) Applicant: Headworks International, Inc., Houston, Texas 77041 (US)
(72) Inventor: Seidl, Gerald, Houston, Texas, 77041 (US); McCauley, Wayne, Houston, Texas, 77041 (US)
(74) Representative: Grünecker Patent- und Rechtsanwälte PartG mbB

(57) **Abstract**

A screen filter is provided, that includes a vibration sensor, a screen filter chain, and a vibration monitoring system. The vibration monitoring system is configured to receive a vibration signal transmitted by the vibration sensor, wherein the vibration sensor is disposed on a component of the wastewater screen filter. The vibration monitoring system is additionally configured to determine if the vibration signal is representative of an undesired loosening of the screen filter chain, to generate an operator alert when the vibration signal is representative of the undesired loosening of the screen filter chain.

## Description

### CLAIM OF PRIORITY

This application claims the benefit of priority under 35 U.S.C. § 119(e) to U.S. Provisional Patent Application Serial No. 63/694,500, filed on September 13, 2024, which is incorporated by reference herein in its entirety.

### TECHNICAL FIELD

The present disclosure generally relates to wastewater screen filters, and more specifically, to a vibration monitor of a wastewater screen filter.

### BACKGROUND

The subject matter disclosed herein relates to the field of wastewater treatment, and more particularly to a screen filter for use in such applications that provides for a chain drive of a scraper assembly used to remove debris from rakes within the screen filter.

In the field of wastewater treatment, a range of components are used at various stages of water capture and processing, ultimately resulting in treated water that may be used or released into the environment. One component that is often found at the initial stages of wastewater collection and treatment is the screen filter. These devices allow for water to flow into a screen which collects larger debris while allowing the strained water to flow through for further filtering and treatment. In one type of screen filter, one or more chain-mounted rakes are continuously moved over a screen field to remove the debris that is collected from the water. Typically, the one or more chains are moved by a drive assembly over sprockets, so that the collection and raking operations may be performed without operator intervention, at least during times when water is flowing through the filter. The debris is scraped from the rakes and may be disposed of accordingly.

Persistent problems in such devices may result from wear on the moving elements, particularly on the chain and on the sprocket assemblies used to guide the chain. Such wear may result in the loss of efficiency of the drive used to move the rakes, and may be costly. There is a need, therefore, for improved techniques for managing the chain drive and related components.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In the field of wastewater treatment, screen filters are used in the initial stages of water processing to remove certain unwanted detritus. These devices use chain-driven rakes to continuously remove debris collected on a screen field. However, problems can arise from wear and stretch on the moving elements, particularly the chain and sprocket assemblies used to guide the chain. Such wear or stretch may reduce the efficiency of the drive system used to move the rakes, potentially leading to costly repairs or replacements.

Previous approaches to addressing chain wear and tension issues in screen filters have had limitations. Manual inspection and adjustment of chain tension by operators can be time-consuming and may not detect problems early enough to prevent damage. Some systems have employed proximity switches or slip clutches to detect jams or overloads, but these methods may not effectively monitor gradual chain wear and loosening over time. The present disclosure provides an improved system for monitoring chain tension and component engagement in wastewater screen filters. In certain examples, a wastewater screen filter system utilizes a vibration (e.g., sound) sensing system to measure vibration on a screen filter and to alert operators to potential issues. This approach offers several advantages over previous methods:

1) Continuous monitoring: The vibration sensor can provide real-time data on the screen filter's operation, allowing for early detection of problems.

2) Non-invasive measurement: Unlike systems that require direct contact with the chain or other moving parts, the vibration sensor can be mounted on the motor or frame, reducing the risk of sensor damage or interference with normal operation.

3) Adjustable sensitivity and Artificial Intelligence (AI) in situ learning: The system allows for setting vibration ranges via AI and/or manually, enabling customization for different screen filter sizes and operating conditions in situ.

4) Retrofit and integration with existing controls: The vibration sensing system can be easily retrofitted into existing systems in the field and integrated directly into the screen filter's electrical control system or connected via a separate processor, providing flexibility in implementation.

In certain examples, the vibration sensing system comprises one or more sensors mounted on a suitable location on the screen filter, such as the motor. It has been found that certain motor locations, such as a motor casing, provide for an installation that captures the vibrations through the wastewater screen in a more accurate and unobtrusive manner. However, sensors can be placed in other locations, such as the gearbox, or frame. In one embodiment, a vibration sensor is attached to the motor using a magnetic mount, which allows for easy installation and repositioning if needed. The sensor measures vibration within a predetermined range and is connected to a processor or integrated directly into the screen filter's control system.

When the measured vibration falls outside the acceptable range, the vibration system generates an alert through the screen filter's electrical control system. This alert notifies the operator to acknowledge the issue, make necessary chain tension adjustments, and perform a visual inspection of the screen filter for any engagement issues between components. The vibration sensor can also be used by the screen filter's control system to automatically adjust chain tension, for example, via a chain tensioning system. The vibration system may employ various types of vibration sensors, including but not limited to fiber optic sensors, piezoelectric devices, or accelerometers. The choice of sensor type can be based on factors such as cost, sensitivity, and environmental conditions.

The system can be further enhanced by incorporating artificial intelligence (AI) algorithms to analyze vibration patterns and predict potential issues before they become critical. This predictive and preventative maintenance capability allows for more proactive management of screen filter maintenance, reducing unexpected failures and optimizing maintenance schedules. By providing timely alerts for chain adjustments and inspections, the vibration system can improve screen filter longevity, reduce maintenance costs, and enhance the overall efficiency of wastewater treatment processes.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a perspective view of a screen filter for wastewater applications employing a chain vibration system, according to some examples.
FIG. 2 is a block diagram showing further details of a vibration monitoring system, according to some examples.
FIG. 3 is a flowchart of a process suitable for deriving undesired screen chain conditions based on vibration sensor readings, according to some examples.
FIG. 4 illustrates machine learning engine for training AI models, in accordance with some examples.
FIG. 5 is a block diagram depicting a machine suitable for executing instructions via one or more processors, according to some examples.

### DETAILED DESCRIPTION OF THE INVENTION

Reference will now be made in detail to specific example embodiments for carrying out the inventive subject matter. Examples of these specific embodiments are illustrated in the accompanying drawings, and specific details are set forth in the following description in order to provide a thorough understanding of the subject matter. It will be understood that these examples are not intended to limit the scope of the claims to the illustrated embodiments. On the contrary, they are intended to cover such alternatives, modifications, and equivalents as may be included within the scope of the disclosure.

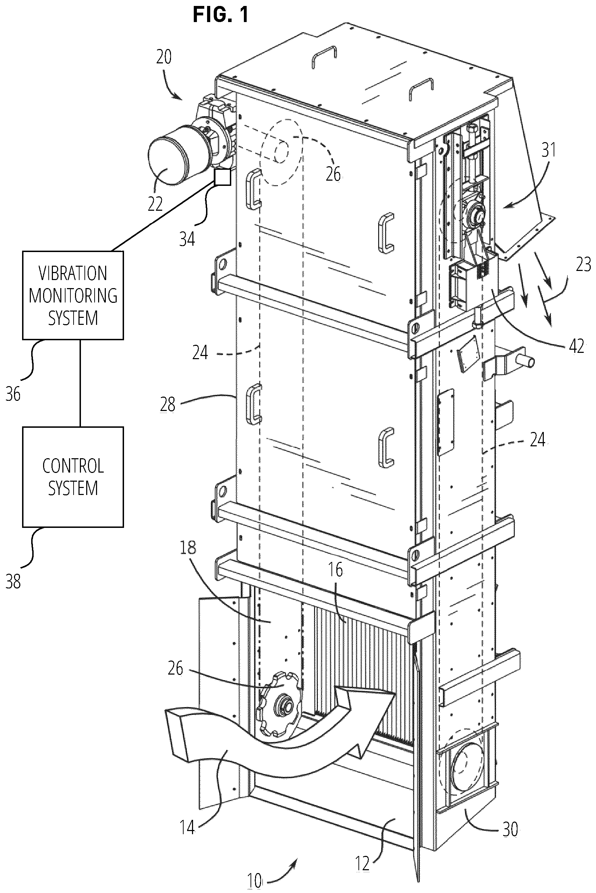

FIG. 1 is a perspective view of an example screen filter 10 that is used in a wastewater treatment facility. The screen filter 10 can be used as a clean water screen, such as a water intake screen, power plant water intake screen, and so on, or a type of screen where perforated elements, wedge wire, and/or a mesh is used to capture unwanted solids. As will be appreciated by those skilled in the art, the screen filter may be positioned vertically or at an angle at an entrance side of a collection point or treatment facility. An open end 12 of the screen filter 10 receives a flow of water as indicated by arrow 14 through a filter screen 16 which may be seen in the interior volume 18 in the image of FIG. 1. The filter screen 16 may stop large debris from flowing through the filter 10 to downstream components, while allowing water to flow through for subsequent filtering and treatment.

Also depicted is a chain drive assembly 20 including a motor, such as an electric motor 22 used to drive one or more chains 24 (depicted as a broken line). The chains 24 may use sprockets, such as a sprocket 26, to move a rake useful in removing debris that may collect on the filter screen 16. The debris is collected and disposed of appropriately, as depicted by arrows 23. Unfortunately, wear on the chain 24, improper chain 24 tensioning, or other issues, may result in certain slackness or over-tightness, thus reducing overall efficiency of the chain drive assembly 20 and increasing wear on components of the screen filter 10. The chain 24 is mounted on a drive side wall 28 having a drive side chain tensioner. Likewise, a second chain 24 is mounted on an opposite side wall 30 having a wall side chain tensioner 31. The chain tensioner assemblies, such as the chain tensioner 31 described herein, may maintain a more constant chain 24 tension, thus improving chain drive 20 efficiency and minimizing wear and tear on components of the screen filter 10.

A sensor 34 is communicatively coupled to a vibration monitoring system 36 that measures vibration within a predetermined range. The sensor 34 is shown as mounted on the motor 22 or gearbox of the screen filter, as these components act as amplifiers for the vibrations caused by chain looseness or other issues, such as a bent tooth (e.g., chain sprocket tooth that then contacts screen field bars), a mechanical interference, due to a foreign object impact, a mechanical structural fatigue, a mechanical structural failure, and the like). However, one or more sensors 34 can be positioned at any location in the screen filter 10, such as on outside walls, top sections, bottom sections, and so on. In some examples, the sensor 34 is a small device that can be magnetically or permanently attached to the outside (e.g., casing) of the motor or gearbox. The magnetic mounting allows for easy installation and repositioning if needed. The sensor 34 is sensitive enough to detect small movements, such as when the gearbox and motor assembly rotates up and down slightly due to chain looseness or loading on the rakes.

In certain examples, the sensor 34 converts physical vibrations and/or sound into an electrical signal. In one example, the sensor 34 is a 2-wire loop-powered 4-20mA RMS vibration velocity sensor (per ISO 10816). The sensor(s) 34 capture machinery/equipment performance data by creating, for example, a 4-20 mA signal proportional to the level of vibration the machine is making. This data can be used by programable logic controllers (PLC's) or other control systems to actuate certain systems and/or to automatically tension the chain 34. In some examples, the sensor 34 comes with a NEMA 4X enclosure, a 1/4-28 UNF 2A threaded mount, an M12 connector. The analog signal provided via sensors 34 can be scaled to have an even tighter minimum and maximum range, allowing for fine-tuning of the system's sensitivity.

In certain embodiments, the sensor 34 is a distributed optical sensor, a point sensor, and/or a quasi-distributed optical sensor suitable for detecting vibration. For example, a laser pulse is emitted down a fiber optic cable to measure vibration and temperature as well as the position of that vibration and temperature. Using a combination of Rayleigh backscatter, Brillouin Backscatter, and time of flight, the sensor 34 determines the presence, location, intensity, and frequency of vibrations and temperature changes along an optical fiber in real-time. The optical fiber can be placed, for example, alongside a wall of the screen filter 10 that encloses the chain 24. Other optical sensors include point and quasi-distributed sensors that include fiber Bragg grating (FBG), Fabry-Pérot techniques, self-mixing techniques, and/or Doppler vibrometry.

Integration with a control system 38 for the screen filter 10 can be achieved in various ways. In one example, the vibration monitoring system 36 includes a separate processor that is then integrated with the screen filter's electrical control system. Alternatively, the vibration monitoring system 36 can be integrated directly into the screen filter's control system 38 without the use of a separate processor. In both cases, the vibration settings and acceptable range can be adjusted through the screen filter electrical control system's operator interface terminal. This allows for customization based on the specific characteristics of each screen filter installation. Additionally or alternatively, the vibration monitoring system 36 can be disposed as a separate system within the screen filter 10.

The vibration monitoring system 36 continuously monitors the vibration levels. When the vibration exceeds the predetermined acceptable range, it triggers an alert through the screen filter's electrical control system. This alert notifies the operator to check and adjust the chain tension as necessary and perform a visual inspection for potential engagement issues between components. In some examples, the vibration monitoring system 36 is operatively coupled to one or more actuators or systems, such as the chain tensioner 31. The vibration monitoring system 36 then, in some examples, automatically readjusts the chain tension via the chain tensioner 31.

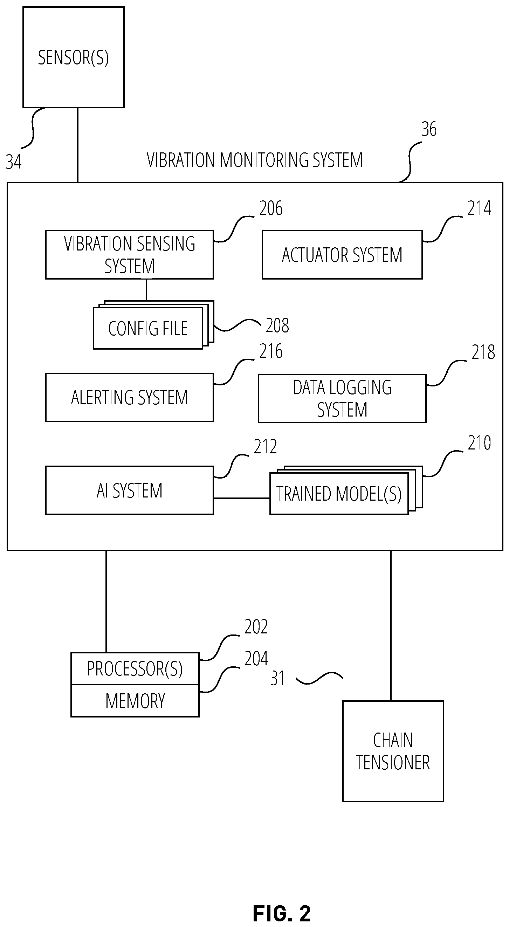

FIG. 2 is a block diagram showing further details of the vibration monitoring system 36, according to some examples. In the depicted example, the vibration monitoring system 36 uses one or more processor(s) 202 to execute computer code or instructions stored, for example, in the memory 204. The vibration sensing system 36 includes a vibration sensing system 36. The vibration sensing system 36 is communicatively coupled to one or more sensor(s) 34, such as vibration or sound sensors. As mentioned earlier, sensors 34 include 2-wire loop-powered 4-20mA RMS vibration velocity sensors that capture machinery/equipment performance data by creating, for example, a 4-20 mA signal proportional to the level of vibration the machine is making. Velocity sensors 34, in some examples, are solid-state piezoelectric velocity measurement devices such as accelerometers with an internal integration circuit which will produce an output relative to velocity.

In certain embodiments, the sensor 34 is a distributed, a point, and/or a quasi-distributed optical sensor suitable for detecting vibration. The optical fiber can be placed, for example, alongside a wall of the screen filter 10 next to the chain 24. In use, vibration from various mechanical components of the screen filter 10 are detected by the sensor(s) 34. The sensor(s) 34 then pass signals, such as electrical signals and/or data, representative of the detected vibrations. The vibration sensing system 36 then applies certain configuration file(s) 208 and/or trained artificial intelligence (AI) model(s) 210 to determine if the electrical signals and/or data are actionable.

In one example, a configuration file 208 includes a permissible vibration range. For example, a manufacturer of the screen filter 10 provides the permissible vibration range as included in the configuration file 208. During installation of the screen filter 10, an installation engineer can modify the configuration file 208 to modify the permissible vibration range. An operator of the screen filter 10 can also, during operations of the screen filter 10, modify the configuration file 208 to modify the permissible vibration range. In some examples, if a vibration value is over the permissible vibration range, then a vibration issue is raised. In other examples, if a vibration value is under the permissible vibration range, then a vibration issue is raised. In yet other examples, if a vibration value is either over or under the permissible vibration range then a vibration issue is raised. Additionally, in some examples, the vibration value has to stay over and/or under the permissible vibration range for at least a time range (e.g., 1 second, 5 seconds, 10 seconds, and so on) to prevent false positives.

The trained AI models 210 are used in addition to or in lieu of the configuration file(s) 208. More specifically, an AI system 212 receives as input the one or more signals and/or data from the sensor(s) 34 and then applies certain AI techniques, such as pattern recognition, to determine, in some examples, if the input signals and/or data fit a pattern of normal operations or is outside the pattern of normal operations. That is, the models 210 are trained, as further described below, to capture and store normal operating patterns. The learned patterns are stored, in certain examples, as parameters (e.g., weights, biases) of a neural network. The trained AI model 210 also include models trained to detect certain anomalous patterns. For example, vibration patterns due to a loose chain(s) 24, due to overtightening of the chain(s) 24, due to worn links in the chain(s) 24, due to a missing chain 24, and so on, are stored in the trained AI model 210 and used to detect similar patterns during operations. The AI system 212 then takes in as input, in real-time, the sensor signals and/or data and uses the trained AI models 210 to determine if the sensor signals and/or data are indicative of certain vibration issues (e.g., loose chain, overtightened chain, worn links, worn sprocket, missing chain, and so on) by identifying previously learned patterns. Additionally or alternatively, the AI system 212 will use the "normal" operations patterns learned during training of the trained AI models 210 and then detect vibration issues due to deviations in the sensors signals and/or data from the learned "normal" operation patters. The AI system 212 can be included as part of the vibration sensing system 206 or be a separate system communicatively connected to the vibration sensing system 206.

Once vibration issues are detected, either via use of the configuration file(s) 208 and/or the trained AI models 210, the alerting system 216 will generate one or more alerts, such as operator alerts. For example, based on setting for the alerting system 216, lights are turned on, alarm sounds are turned on, emails are sent, text notifications are sent, software application push notifications are sent, and so on. The alerts generated by the alerting system 216 can be customized based on the specific characteristics of each screen filter installation, allowing for fine-tuning of sensitivity and response thresholds. This customization ensures that the alerting system 216 can more effectively serve a wide range of wastewater treatment facilities with varying equipment configurations and operational parameter.

The actuator system 214 is used for automated adjustments to the chain tensioner or other mechanical components based on vibration data collected by the vibration sensing system 206. For example, the actuator system 214 can automatically tighten or loosen the chains 24, or make other adjustments to the screen filter 10 components to maintain a desired performance and reduce vibrations when issues are detected. For example, if the vibration issue detected is a loose chain 24, the actuator system 214 then tightens the chain 24 via the chain tensioner. There are different types of chain tensioners, such as jack-based tensioners and bolt-based tensioners. Jack-based tensioners use a jack, such as a hydraulic jack, which moves the sprockets 26 to tighten and/or loosen the chains 24. Screw-based tensioners typically use a bolt moveable via a screw. Regardless of the actuator type used, the actuator system 214 will engage the actuator to either tighten or loosen the chain(s) 24.

In some examples, operations of the screen filter 10 are stopped while the actuator system 214 re-tensions the chain(s) 24, for example, via the chain tensioner 31. In some examples, the actuator system 214 re-tensions the chain(s) 24 without stopping operations of the screen filter 10. In these examples, the vibration sensing system 36 decides, via the configuration file(s) 208 and/or the trained AI models 210, that the screen filter 10 operations should be stopped during chain adjustment, or continued. When the configuration file(s) 208 are used, the configuration file(s) 208 include a second set of vibration ranges with some ranges being of the "permissible to continue operations during adjustment" range types with others being of the "stop operations for adjustment" range type. Likewise, the AI trained AI models 210 are trained to identify vibration patterns where the chain 24 under observation is adjustable while maintaining operations, while other vibration patterns are identified to be vibrations where screen filter 10 operations are to be stopped before adjustment. The actuator system 214 will then continue or stop operations of the screen filter 10 to then adjust the screen filter 10.

The data logging system 218 is responsible for recording vibration data over time, allowing for trend analysis and historical comparisons. In certain examples, the data logging system 218 works in conjunction with other components of the vibration monitoring system 36, particularly the vibration sensing system 206, to collect and store vibration measurements. The stored vibration data includes time of recording can be used for various purposes, such as:
1. Tracking long-term trends in equipment performance
2. Identifying patterns that may indicate developing issues
3. Providing historical context for current vibration readings
4. Supporting predictive maintenance strategies

The data logged by data logging system 218 is then analyzed to improve maintenance schedules, improve system performance, and potentially extend the lifespan of the wastewater screen filter 10 components.

In some examples, the data captured by the data logging system 218 is used to train one or more of the trained AI models 210. For example, during initial installation, once the screen filter 10 is set up and running as desired, the data logging system 218 captures data representative of normal operations. For example, 1 hour, 10 hours, 1 day, 10 days, and so on, of normal operations of the screen filter 10 is captured. This data is then used by the AI system 212 as training data used to create one or more of the trained AI models 210. In some examples, this in situ training includes adjusting the chain(s) 24 as desired. Accordingly, the trained AI models 210 include data representative of "desired" chain adjustments. These trained AI model 210 are then used during operations of the vibration monitoring system 36, as mentioned above, to alert of certain conditions and to adjust the chains 24.

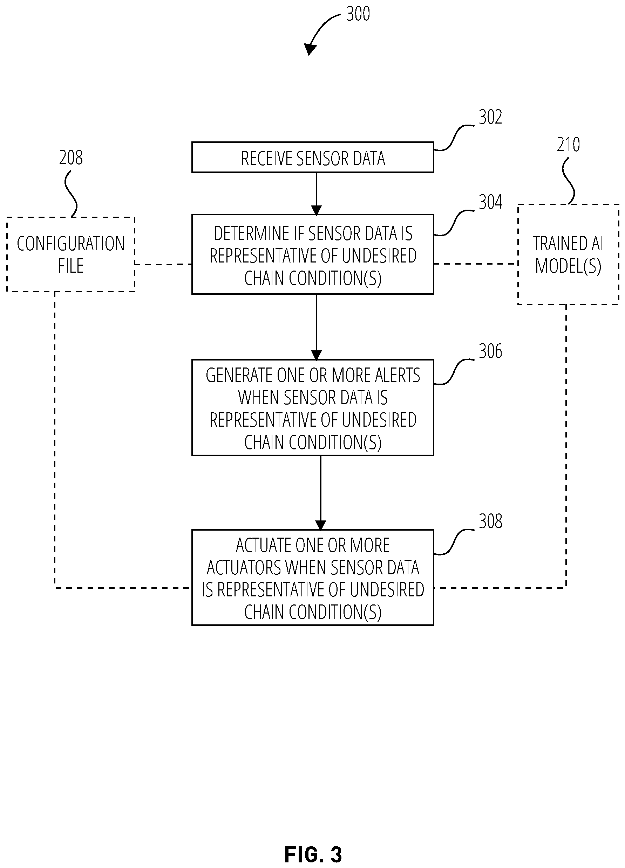

FIG. 3 is a flowchart of a process 300 suitable for deriving undesired screen chain 24 conditions based on the vibration sensor 34, according to some examples. In the depicted example, the process 300 receives, at block 302, sensor signals or data from one or more of the vibration sensors 34. As mentioned earlier, the sensors 34 include 2-wire loop-powered 4-20 milliamp RMS vibration velocity sensors, distributed optical sensors, point optical sensor, and/or quasi-distributed optical sensors. In some examples, one of the sensors 34 is magnetically attached to the exterior of the motor 22, which is in turn attached to a side wall of the wastewater screen filter 10.

During operations of the wastewater screen filter 10, the vibration sensors 34 transmit electric signals and or data representative of vibrations being sensed. Accordingly, the process 300, at block 304, determines if the sensor signals or data is representative of undesired chain condition(s), such as a loose chain, a tight chain, worn chain links, and/or a missing chain (e.g., chain what has fallen off).

In some examples, the process 300 uses the configuration file 208 and/or the trained AI models 210 to determine the undesired chain conditions. For example, the configuration file 208 includes certain predetermined vibration value or predetermined vibration value ranges, and exceeding the predetermined vibration value or predetermined vibration range, will result in the determination that a certain condition is occurring, such as a loose chain 24, a tight chain 24, and so on. Likewise, the receiving certain value or value ranges lower than the predetermined vibration value or predetermined vibration value ranges can be representative of certain chain issues, such as such as a loose chain, a tight chain, worn chain links, and/or a missing chain. The location of the sensor 34, in some examples, determines whether exceeding the predetermined vibration value or predetermined vibration range is used to determine certain of the undesired chain conditions, or if current vibration values below the predetermined vibration value or predetermined vibration range is used to determine certain of the undesired conditions. For example, when the sensor 34 is disposed (e.g., magnetically attached) to the outer covering of the motor 22, current vibration values exceeding the predetermined vibration value or predetermined vibration range will be representative of a loose chain.

In some examples, in addition to or alternative to using the configuration file 208, the process 300 uses the trained AI models 210 to determine the undesired chain conditions. As mentioned above, the trained AI models 210 are trained to recognize certain patterns in the signals and/or data received from the sensor(s) 34. Accordingly, when a vibration pattern representative of an undesired condition is identified via the trained AI models 210, the undesired condition is determined to be occurring. A vibration pattern refers to a list of vibration points in increasing time, such as (v1, t1), (v2, t2), (v3, t3), ..., (vn, tn) where vx is a vibration value and tx is the time at which the vibration value vx was detected.

Once the process 300 determines that the undesired chain condition or conditions are occurring, the process 300, at block 306, generates one or more alerts. For example, alerts include sounds, lights, text messages, emails, application "push" notifications, and so on, that describe the one or more conditions that have been detected. In some examples, the alert notifies the operator to acknowledge the issue by pressing certain buttons as well as guides the operation in making certain chain tension adjustments, as well as guides the operation in performing a visual inspection of the screen filter for any engagement issues between components.

In some examples, the process 300 actuates, at block 308, one or more actuators, such as valves, relays, pneumatic actuators, positioners and so on. In some examples, the chain tensioners 31 is actuated to tighten (or loosen) one or more of the chains 24 depending on the identified condition. That is, if a chain 24 is determined to be loose, then the chain 24 is tightened, or if the chain 24 is determined to be overtight, then the chain 24 is loosened. In some example, an amount of tightening or loosening is determined based on the configuration file 208 and/or the trained AI models. For example, the chain tensioner 31 can be given a chain tension value to achieve, or can be turned on for a certain time. In certain examples, the chain tensioner 31 is turned on until the vibration sensing system 36 detects that the undesired condition found earlier is no longer present.

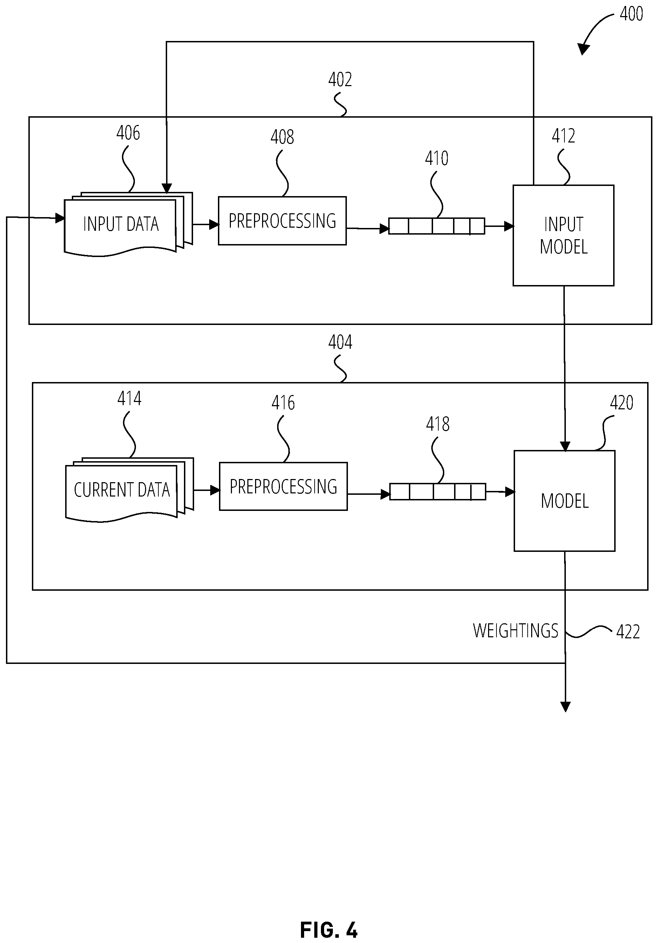

FIG. 4 illustrates machine learning engine for training the trained AI models 210 in accordance with some examples. The machine learning engine may be deployed to execute at a mobile device (e.g., a cell phone) or a computer. A system may calculate one or more weightings and/or biases for criteria based upon one or more machine learning algorithms. FIG. 1 shows an example machine learning engine 400 according to some examples of the present disclosure.

Machine learning engine 400 uses a training engine 402 and a prediction engine 404. Training engine 402 uses 406, for example after undergoing preprocessing component 408, to determine one or more features 410. The one or more features 410 may be used to generate an initial model 412, which may be updated iteratively or with future labeled or unlabeled data (e.g., during reinforcement learning).

The input data 406 may include vibration patterns representative of certain conditions. As mentioned earlier, a vibration pattern refers to a list of vibration points in increasing time, such as (v1, t1), (v2, t2), (v3, t3), ..., (vn, tn) where vx is a vibration value and tx is the time at which the vibration value vx was detected. Accordingly, vibration patterns with thousands or more vx, tx values are used, where each vibration pattern is labeled with its corresponding chain condition (e.g., loose chain, overtight chain, worn chain links, worn sprockets that drive the chain, missing chain, and so on), as well as a label for vibration patterns representative of normal operations (e.g., operations where the chain is working as desired).

In the prediction engine 404, current data 414 (e.g., vibration values sensed via sensor(s) 34 during operations of the wastewater chain filter 10) may be input to preprocessing component 416. In some examples, preprocessing component 416 and preprocessing component 408 are the same. The prediction engine 404 produces feature vector 418 from the preprocessed current data, which is input into the model 420 to generate one or more criteria weightings 422. The criteria weightings 422 may be used to output a prediction, as discussed further below.

The training engine 402 may operate in an offline manner to train the model 420 (e.g., on a server). The prediction engine 404 may be designed to operate in an online manner (e.g., in real-time, at a mobile device, on a wearable device, etc.). In some examples, the model 420 may be periodically updated via additional training (e.g., via updated input data 406 or based on labeled or unlabeled data output in the weightings 422) or based on identified future data, such as by using reinforcement learning to personalize a general model (e.g., the initial model 412) to a particular user. Labels for the input data 406 may include "loose chain", "overtight chain", "worn chain links", "worn sprockets", "normal operation", and so on

The initial model 412 may be updated using further input data 406 until a satisfactory model 420 is generated. The model 420 generation may be stopped according to a specified criteria (e.g., after sufficient input data is used, such as 1,000, 10,000, 400,000 data points, etc.) or when data converges (e.g., similar inputs produce similar outputs).

The specific machine learning algorithm used for the training engine 402 may be selected from among many different potential supervised or unsupervised machine learning algorithms. Examples of supervised learning algorithms include artificial neural networks, Bayesian networks, instance-based learning, support vector machines, decision trees (e.g., Iterative Dichotomiser 3, C9.5, Classification and Regression Tree (CART), Chi-squared Automatic Interaction Detector (CHAID), and the like), random forests, linear classifiers, quadratic classifiers, k-nearest neighbor, linear regression, logistic regression, and hidden Markov models. Examples of unsupervised learning algorithms include expectation-maximization algorithms, vector quantization, and information bottleneck method. Unsupervised models may not have a training engine 402. In an example embodiment, a regression model is used and the model 420 is a vector of coefficients corresponding to a learned importance for each of the features in the vector of features 410, 418. A reinforcement learning model may use Q-Learning, a deep Q network, a Monte Carlo technique including policy evaluation and policy improvement, a State-Action-Reward-State-Action (SARSA), a Deep Deterministic Policy Gradient (DDPG), or the like. Once trained, the model 420 is now one of the trained AI models 210.

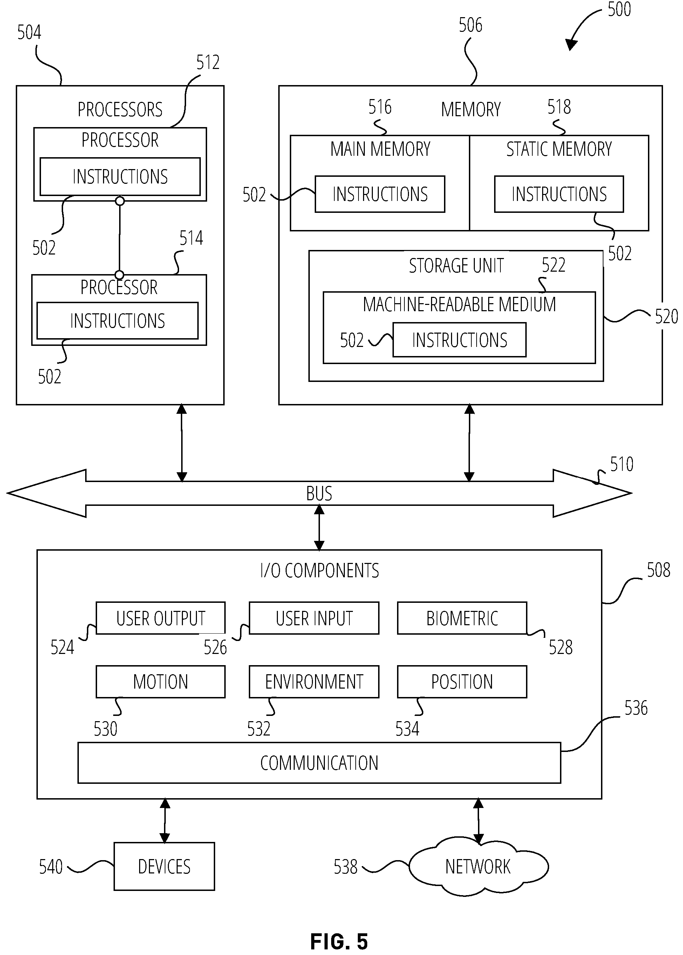

FIG. 5 is a diagrammatic representation of a machine 500 within which instructions 502 (e.g., software, a program, an application, an applet, an app, or other executable code) for causing the machine 500 to perform any one or more of the methodologies discussed herein may be executed. For example, the instructions 502 may cause the machine 500 to execute any one or more of the processes or methods described herein, such as the process 300. The instructions 502 transform the general, non-programmed machine 500 into a particular machine 500, e.g., the vibration sensing system 36 system, programmed to carry out the described and illustrated functions in the manner described. The machine 500 may operate as a standalone device or may be coupled (e.g., networked) to other machines. In a networked deployment, the machine 500 may operate in the capacity of a server machine or a client machine in a server-client network environment, or as a peer machine in a peer-to-peer (or distributed) network environment. The machine 500 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smartphone, a mobile device, a wearable device (e.g., a smartwatch), a smart home device (e.g., a smart appliance), other smart devices, a web appliance, a network router, a network switch, a network bridge, or any machine capable of executing the instructions 502, sequentially or otherwise, that specify actions to be taken by the machine 500. Further, while a single machine 500 is illustrated, the term "machine" shall also be taken to include a collection of machines that individually or jointly execute the instructions 502 to perform any one or more of the methodologies discussed herein. In some examples, the machine 500 may also comprise both client and server systems, with certain operations of a particular method or algorithm being performed on the server-side and with certain operations of the particular method or algorithm being performed on the client-side.

The machine 500 may include processors 504, memory 506, and input/output I/O components 508, which may be configured to communicate with each other via a bus 510. In an example, the processors 504 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application-Specific Integrated Circuit (ASIC), a Radio-Frequency Integrated Circuit (RFIC), another processor, or any suitable combination thereof) may include, for example, a processor 512 and a processor 514 that execute the instructions 502. The term "processor" is intended to include multi-core processors that may comprise two or more independent processors (sometimes referred to as "cores") that may execute instructions contemporaneously. Although FIG. 5 shows multiple processors 504, the machine 500 may include a single processor with a single-core, a single processor with multiple cores (e.g., a multi-core processor), multiple processors with a single core, multiple processors with multiples cores, or any combination thereof.

The memory 506 includes a main memory 516, a static memory 518, and a storage unit 520, both accessible to the processors 504 via the bus 510. The main memory 516, the static memory 518, and storage unit 520 store the instructions 502 embodying any one or more of the methodologies or functions described herein. The instructions 502 may also reside, completely or partially, within the main memory 516, within the static memory 518, within machine-readable medium 522 within the storage unit 520, within at least one of the processors 504 (e.g., within the processor's cache memory), or any suitable combination thereof, during execution thereof by the machine 500.

The I/O components 508 may include a wide variety of components to receive input, provide output, produce output, transmit information, exchange information, capture measurements, and so on. The specific I/O components 508 that are included in a particular machine will depend on the type of machine. For example, portable machines such as mobile phones may include a touch input device or other such input mechanisms, while a headless server machine will likely not include such a touch input device. It will be appreciated that the I/O components 508 may include many other components that are not shown in FIG. 5. In various examples, the I/O components 508 may include user output components 524 and user input components 526. The user output components 524 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The user input components 526 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and force of touches or touch gestures, or other tactile input components), audio input components (e.g., a microphone), and the like.

In further examples, the I/O components 508 may include biometric components 528, motion components 530, environmental components 532, or position components 534, among a wide array of other components. For example, the biometric components 528 include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 530 include acceleration sensor components (e.g., accelerometer), gravitation sensor components, rotation sensor components (e.g., gyroscope).

The environmental components 532 include, for example, one or cameras (with still image/photograph and video capabilities), illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 534 include location sensor components (e.g., a global positioning system (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 508 further include communication components 536 operable to couple the machine 1200 to a network 538 or devices 540 via respective coupling or connections. For example, the communication components 536 may include a network interface component or another suitable device to interface with the network 538. In further examples, the communication components 536 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 540 may be another machine or any of a wide variety of peripheral devices (e.g., a peripheral device coupled via a universal serial bus (USB) port), internet-of-things (IoT) devices, and the like.

Moreover, the communication components 536 may detect identifiers or include components operable to detect identifiers. For example, the communication components 536 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 536, such as location via Internet Protocol (IP) geolocation, location via Wi-Fi^{®} signal triangulation, location via detecting an NFC beacon signal that may indicate a particular location, and so forth.

The various memories (e.g., main memory 516, static memory 518, and memory of the processors 504) and storage unit 520 may store one or more sets of instructions and data structures (e.g., software) embodying or used by any one or more of the methodologies or functions described herein. These instructions (e.g., the instructions 502), when executed by processors 504, cause various operations to implement the disclosed examples.

The instructions 502 may be transmitted or received over the network 538, using a transmission medium, via a network interface device (e.g., a network interface component included in the communication components 536) and using any one of several well-known transfer protocols (e.g., hypertext transfer protocol (HTTP)). Similarly, the instructions 502 may be transmitted or received using a transmission medium via a coupling (e.g., a peer-to-peer coupling) to the devices 540.

The techniques described herein relates to a wastewater screen filter system with an integrated vibration monitoring and control mechanism. The system comprises several components working together to ensure optimal performance and maintenance of the screen filter chain. A vibration sensor is provided, typically mounted on the motor or gearbox of the screen filter. This sensor is designed to detect and measure vibrations caused by various factors, including chain looseness or other mechanical issues. In some examples, the sensor converts physical vibrations into an electrical signals, specifically a 4 to 20 milliamp output, where 4 milliamps represents the least vibration, and 20 milliamps represents the most vibration. The vibration data collected by the sensor is processed by a vibration monitoring system 36. This system analyzes the incoming data to determine if the vibrations fall within acceptable parameters or if they indicate a potential issue with the screen filter's operation.

When vibration levels exceed predetermined thresholds or vibration patterns are identified, an alerting system 216 is triggered. This system generates alerts notifying operators of potential issues that require attention. The alerts can be customized based on the specific characteristics of each screen filter installation, allowing for fine-tuning of sensitivity and response thresholds. The vibration monitoring system 36 also incorporates an actuator system 214, which is responsible for automated adjustments to the chain tensioner or other mechanical components based on the vibration data. This system can automatically tighten or loosen the chain, or make other adjustments to maintain optimal performance and reduce vibrations when issues are detected.

A data logging system 218 records vibration data over time, enabling trend analysis and historical comparisons. This data can be used for tracking long-term equipment performance, identifying patterns that may indicate developing issues, and supporting predictive maintenance strategies. An AI system 212 can be incorporated to analyze vibration patterns and predict maintenance needs, further optimizing system performance and potentially extending the lifespan of the wastewater screen filter components.

The modular design of this system allows for easy integration with existing screen filter control systems and provides flexibility for future upgrades or additions. By continuously monitoring and adjusting the screen filter chain tension, this invention aims to improve the efficiency and longevity of wastewater treatment equipment while reducing maintenance costs and downtime.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A wastewater screen filter, comprising:
a vibration sensor;
a wastewater screen filter chain; and
a vibration monitoring system configured to:
receive a vibration signal transmitted by the vibration sensor, wherein the vibration sensor is disposed on a component of the wastewater screen filter;
determine if the vibration signal is representative of an undesired loosening of the screen filter chain; and
generate an operator alert when the vibration signal is representative of the undesired loosening of the screen filter chain.

2. The wastewater screen filter of claim 1, wherein the vibration monitoring system is configured to determine if the vibration signal is representative of an undesired loosening of the screen filter chain, a bent tooth, a mechanical interference with a foreign object, a mechanical structural fatigue of a component of the screen filter, a mechanical failure of the component of the screen filter, or a combination thereof, by comparing the vibration signal against a predetermined vibration value.

3. The wastewater screen filter of claim 2, wherein the comparison of the vibration signal against the predetermined vibration value comprises a determination that the vibration signal has exceeded the predetermined vibration value.

4. The wastewater screen filter of claim 1, wherein the vibration monitoring system is configured to determine if the vibration signal is representative of an undesired loosening of the screen filter chain by providing the vibration signal as input to a trained artificial intelligence (AI) model that has been trained to detect loose screen filter chain conditions.

5. The wastewater screen filter of claim 4, wherein the trained AI model has been trained to include a set of properties used to identify the undesired loosening of the screen filter chain by presenting data representative of the loose screen filter chain conditions.

6. The wastewater screen filter of claim 5, wherein the set of properties include one or more weights and one or more biases.

7. The wastewater screen filter of claim 5, wherein the vibration monitoring system is further configured to train the trained AI model to identify the undesired loosening of the screen filter chain after installation of the wastewater screen filter and during operations of the wastewater screen filter.

8. The wastewater screen filter of claim 1, wherein the vibration monitoring system is further configured to determine if the vibration signal is representative of an undesired tightening of the screen filter chain.

9. The wastewater screen filter of claim 8, wherein the vibration monitoring system is configured to determine if the vibration signal is representative of an undesired tightening of the screen filter chain by comparing the vibration signal against a predetermined vibration value.

10. The wastewater screen filter of claim 8, wherein the vibration monitoring system is configured to determine if the vibration signal is representative of an undesired tightening of the screen filter chain by providing the vibration signal as input to a trained AI model that has been trained to detect overtight screen filter chain conditions.

11. The wastewater screen filter of claim 1, wherein the vibration sensor comprises a 2-wire loop-powered 4-20 milliamp RMS vibration velocity sensor, a distributed optical sensor, a point optical sensor, or a quasi-distributed optical sensor.

12. The wastewater screen filter of claim 1, wherein the vibration sensor is magnetically attached to an exterior of a motor attached to a side wall of the wastewater screen filter, and wherein the motor is mechanically coupled via a sprocket to the screen filter chain to rotate the screen filter chain.

13. The wastewater screen filter of claim 1, wherein the vibration monitoring system is further configured to actuate a chain tensioner to tighten the screen filter chain when the vibration signal is representative of the undesired loosening of the screen filter chain.

14. A vibration monitoring system for a wastewater screen filter, comprising:
a memory configured to store instructions; and
a processor configured to execute the instructions to perform operations comprising:
receiving a vibration signal transmitted by a vibration sensor, wherein the vibration sensor is disposed on a component of the wastewater screen filter;
determining if the vibration signal is representative of an undesired loosening of a screen filter chain, wherein the screen filter chain is included in the wastewater screen filter; and
generating an operator alert when the vibration signal is representative of the undesired loosening of the screen filter chain.

15. The vibration monitoring system of claim 14, wherein the processor is configured to determine if the vibration signal is representative of an undesired loosening of the screen filter chain by comparing the vibration signal against a predetermined vibration value.

16. The vibration monitoring system of claim 15, wherein the comparison of the vibration signal against the predetermined vibration value comprises a determination that the vibration signal has exceeded the predetermined vibration value.

17. The vibration monitoring system of claim 14, wherein the processor is configured to determine if the vibration signal is representative of an undesired loosening of the screen filter chain by providing the vibration signal as input to a trained artificial intelligence (AI) model that has been trained to detect loose screen filter chain conditions.

18. A non-transitory computer readable medium comprising instructions which, when executed, cause one or more processors to:
receive a vibration signal transmitted by a vibration sensor, wherein the vibration sensor is disposed on a component of a wastewater screen filter;
determine if the vibration signal is representative of an undesired loosening of a screen filter chain, wherein the screen filter chain is included in the wastewater screen filter; and
generate an operator alert when the vibration signal is representative of the undesired loosening of the screen filter chain.

19. The non-transitory computer readable medium of claim 18, wherein the instructions comprise further instructions, which, when executed, cause the one or more processors to determine if the vibration signal is representative of an undesired loosening of the screen filter chain by comparing the vibration signal against a predetermined vibration value.

20. The non-transitory computer readable medium of claim 18, wherein the instructions comprise further instructions, which, when executed, cause the one or more processors to determine if the vibration signal is representative of an undesired loosening of the screen filter chain by providing the vibration signal as input to a trained artificial intelligence (AI) model that has been trained to detect loose screen filter chain conditions.
